# FASCICULE DE BREVET EUROPEEN

(11) **EP 3 092 395 B1**
(45) Date de publication et mention de la délivrance du brevet: **06.11.2019**
(21) Numéro de dépôt: 14831032.9
(22) Date de dépôt: 24.12.2014
(51) Int. Cl.: F02K 1/76, G05B 23/02

(54) **PROCÉDÉ ET PROGRAMME D'ORDINATEUR POUR LA SURVEILLANCE D'UN INVERSEUR DE POUSSÉE À ACTIONNEURS HYDRAULIQUES**
VERFAHREN UND COMPUTERPROGRAMM ZUR ÜBERWACHUNG EINER SCHUBUMKEHRVORRICHTUNG MIT HYDRAULISCHEN STELLGLIEDERN
METHOD AND COMPUTER PROGRAM FOR THE MONITORING OF A THRUST REVERSER HAVING HYDRAULIC ACTUATORS

(30) Priorité: 08.01.2014 FR 1450114
(43) Date de publication de la demande: 16.11.2016
(73) Titulaire: Safran Aircraft Engines, 75015 Paris (FR)
(72) Inventeur: COUPARD, Josselin, F-77550 Moissy Cramayel Cedex (FR); TRAN, Hang-Mi, F-77550 Moissy Cramayel Cedex (FR)
(74) Mandataire: Brevalex
(86) Numéro de dépôt international: PCT/FR2014/053556
(87) Numéro de publication internationale: WO 2015/104475

(56) Documents cités:
- FR-A1- 2 920 201
- FR-A1- 2 939 924
- FR-A1- 2 943 732
- US-A1- 2002 157 376

## Description

### DOMAINE TECHNIQUE

L'invention se rapporte au domaine de la surveillance d'un inverseur de poussée de moteur d'aéronef. En particulier, l'invention concerne un procédé et un programme d'ordinateur de surveillance d'un inverseur de poussée pour en détecter et en pronostiquer des anomalies.

### ÉTAT DE LA TECHNIQUE ANTÉRIEURE

De façon connue, une opération de maintenance préventive consiste à effectuer une inspection d'une machine, par exemple un inverseur de poussée pour moteur d'aéronef, avant qu'une panne empêchant son fonctionnement ne se déclare, cette inspection pouvant conduire éventuellement au remplacement d'une ou de plusieurs pièces de la machine. Bien entendu, pour qu'elle soit efficace d'un point de vue préventif et ne pas engendrer de coûts inutiles, une telle opération ne doit pas être réalisée de façon intempestive mais à un moment opportun de la vie de la machine.

On cherche donc d'une manière générale à réaliser une surveillance efficace d'un inverseur de poussée à même de délivrer un avis de maintenance fiable permettant ainsi d'optimiser les opérations de maintenance sur cet inverseur.

On connaît ainsi de la demande de brevet FR 2 943 732 A1 un procédé de surveillance d'un inverseur de poussée à actionneur commandé par un moteur électrique, procédé qui utilise différents types de paramètres acquis pendant une phase de fonctionnement de l'inverseur de poussée :
- des paramètres représentatifs de la durée de cette phase,
- des paramètres représentatifs de l'énergie vue par le moteur électrique,
- des paramètres représentatifs du couple vu par le moteur électrique,
- des paramètres représentatifs de la durée pendant laquelle la vitesse de rotation de consigne du moteur électrique diffère de la vitesse de rotation mesurée.

Ce procédé s'applique à un inverseur de poussée électrique, n'incluant pas de commandes hydrauliques. Ainsi, pour un inverseur de poussée à actionneurs hydrauliques, seuls les paramètres représentatifs de la durée de cette phase de fonctionnement pourraient être utilisés. Toutefois, de tels indicateurs de durée peuvent être fortement influencés par le contexte extérieur du moteur (température extérieure en particulier). Or les interactions entre données endogènes et données exogènes ne sont pas bien connues. Il en découle que ce procédé connu ne permet pas de réaliser de manière satisfaisante la surveillance d'un inverseur de poussée à actionneurs hydrauliques.

### EXPOSÉ DE L'INVENTION

L'invention vise à proposer une surveillance efficace d'un inverseur de poussée à actionneurs hydrauliques et propose pour ce faire, un procédé de surveillance d'un inverseur de poussée à portes escamotables de moteur d'aéronef, l'inverseur de poussée étant un inverseur à actionneurs hydrauliques doté de contacteurs agencés pour chacun renvoyer une information sur la position des portes, le moteur comprenant un calculateur configuré pour réaliser des mesures d'un paramètre représentatif de la position des contacteurs à partir des informations renvoyées par les contacteurs. Le procédé comprend un calcul d'un ou plusieurs indicateurs statistiques du paramètre mesuré et une analyse de l'évolution temporelle du ou des indicateurs statistiques calculés. Le paramètre mesuré par le calculateur est un ratio de tension entre une tension divisée par un circuit diviseur de tension et une tension d'alimentation du circuit diviseur de tension.

Certains aspects préférés mais non limitatifs de ce procédé sont les suivants :
- le calcul d'un ou plusieurs indicateurs statistiques du paramètre mesuré comprend la détermination d'une moyenne des mesures du paramètre et/ou d'une médiane des mesures du paramètre et/ou d'un écart-type des mesures du paramètre et/ou d'un type de distribution des mesures du paramètre ;
- l'analyse de l'évolution temporelle d'un indicateur statistique calculé comprend le calcul d'une pente de l'indicateur statistique sur une fenêtre temporelle, ou encore la comparaison de l'indicateur statistique calculé avec un indicateur de référence préalablement calculé à partir de mesures du paramètre réalisées lors d'un fonctionnement considéré comme sain de l'inverseur de poussée ;
- le résultat de l'analyse de l'évolution temporelle d'un indicateur statistique calculé est comparé à un seuil, et une alerte de détection d'anomalie est émise en cas de dépassement du seuil ;
- il comprend, en cas de dépassement du seuil, le calcul d'une signature d'anomalie détectée à partir du ou des indicateurs statistiques calculés et la comparaison de la signature d'anomalie détectée à une ou plusieurs signatures de référence chacune caractéristique d'un type de défaillance ;
- il comprend le calcul, à partir du résultat de l'analyse de l'évolution temporelle du ou des indicateurs statistiques calculés, d'une probabilité d'occurrence d'une anomalie.

L'invention porte également sur un produit programme d'ordinateur comprenant des instructions de code pour l'exécution des étapes du procédé selon l'invention, lorsque ledit programme est exécuté sur un ordinateur

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 illustre un circuit diviseur de tension permettant de réaliser la mesure d'un paramètre représentatif de la position de contacteurs agencés chacun pour renvoyer une information sur la position d'une porte de l'inverseur de poussée ;
- la figure 2 est un schéma illustrant un exemple de liaison entre les différents contacteurs d'un inverseur de poussée et le calculateur moteur au moyen de circuits diviseur de tension du type de celui de la figure 1 ;
- la figure 3 est un organigramme illustrant les principales étapes du procédé de surveillance selon l'invention.

### EXPOSÉ DÉTAILLÉ DE MODES DE RÉALISATION PARTICULIERS

Un moteur d'aéronef comprend un calculateur de régulation connu sous le nom de FADEC (« Full Authority Digital Engine Control ») qui agit en temps réel sur différents actionneurs par l'analyse et l'exploitation continue de données collectées par de multiples capteurs tels que des contacteurs.

Un inverseur de poussée pour un tel moteur comprend de manière connue une pluralité de portes escamotables qui sont déployées lors du freinage et fermées lors des autres phases de vol. Chaque porte peut être équipée de trois contacteurs à deux états, ouvert ou fermé, deux contacteurs étant agencées de manière à renvoyer une information sur le niveau de fermeture de la porte et un contacteur étant agencé de manière à renvoyer une information sur le niveau d'ouverture de la porte.

Afin d'éviter toute ouverture intempestive des portes, plusieurs lignes de sécurité sont prévues. Prenant l'exemple d'un inverseur à deux portes et à actionneurs hydrauliques, on peut alors retrouver :
- Une première ligne de sécurité constituée de crochets en forme de S (un sur chaque porte) dont la position est détectée par des contacteurs d'escamotage (« stow switch ») au nombre de deux par crochets. Les crochets sont actionnés par un verrou hydraulique primaire (HPL pour « Hydraulic Primary Lock ») et un verrou électro-hydraulique primaire (EHPL pour « Electro-Hydraulic Primary Lock ») ;
- Une deuxième ligne de sécurité constituée d'actionneurs hydrauliques PDA (pour « Pivot Door Actuator ») et où l'on retrouve des contacteurs de déploiement (« deploy switch ») pour détecter la position des portes (un contacteur par porte) ;
- Une troisième ligne de sécurité comprenant un verrou tertiaire à pilotage électrique indépendant des autres contrôles électriques.

Les informations des quatre contacteurs d'escamotage et des deux contacteurs de déploiement sont relayées vers le calculateur FADEC afin que celui-ci puisse déterminer la position exacte des portes de l'inverseur de poussée.

Afin de réduire la quantité de câbles d'interconnexion entre le calculateur et les contacteurs positionnés au niveau des portes de l'inverseur de poussée, et ainsi de réduire le poids du système global, on a recours à un ou plusieurs circuits de détection des positions individuelles de contacteurs. Ces circuits agissent comme des multiplexeurs pour chacun fournir au calculateur sur une même voie de transmission une information sur l'état de l'ensemble des contacteurs dont ils surveillent la position.

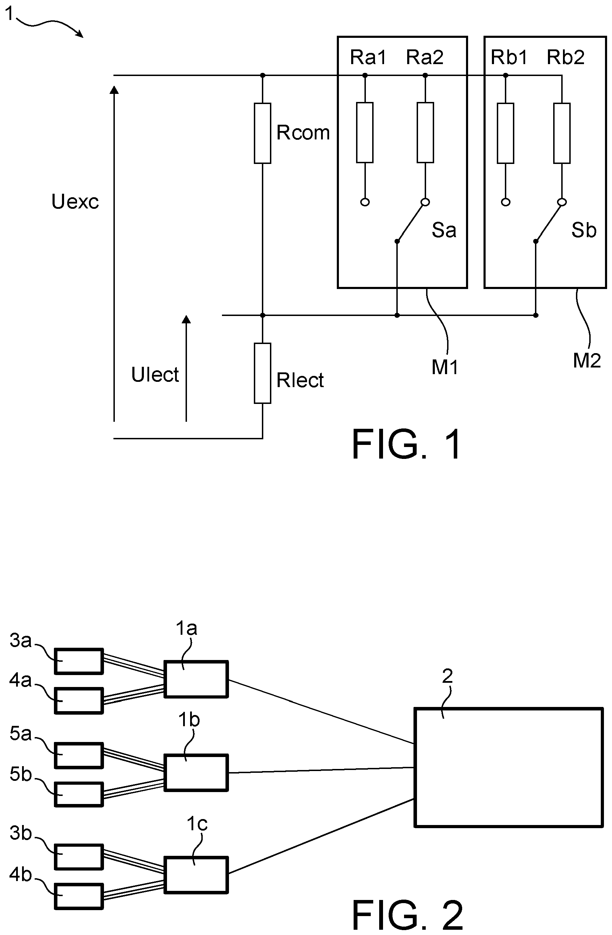

Un tel circuit, dont on pourra trouver une description détaillée dans la demande de brevet WO 2011/050289 A1, prend la forme d'un circuit de résistances formant un circuit diviseur de tension. Comme représenté sur la figure 1, un tel circuit diviseur de tension 1 peut comprendre une résistance de sortie Rlect en série avec des modules M1, M2 reliés en parallèle entre eux, chaque module comprenant un contacteur Sa, Sb relié en série avec une première résistance de module Ra1, Rb1 ou une seconde résistance de module Ra2, Rb2 en fonction de sa position, ouverte ou fermée.

En référence à la figure 2, on notera que l'on peut notamment retrouver trois circuits 1a, 1b, 1c du type de celui illustré sur la figure 1 pour relayer les informations des différents contacteurs vers le calculateur FADEC (dont une seule voie est ici représentée): un premier circuit la associé aux contacteurs d'escamotage 3a, 4a de la première porte, un deuxième circuit 1b associé aux contacteurs de déploiement 5a, 5b de la première et de la deuxième porte, et un troisième circuit associé aux contacteurs d'escamotage 3b, 4b de la deuxième porte.

La valeur du ratio de tension entre la tension Ulect aux bornes de la résistance de sortie Rlect et la tension d'alimentation Uexc du circuit diviseur de tension 1 de la figure 1 varie en fonction des positions des contacteurs Sa et Sb. Ces ratios sont connus avec une précision estimée de 1%, et ont des valeurs caractéristiques lorsque l'inverseur est ouvert ou fermé (en phase stabilisée et non transitoire). Ils permettent en outre de donner des statuts de validité aux contacteurs Sa et Sb.

Ainsi en mesurant comme paramètre représentatif de la position de contacteurs agencés chacun pour renvoyer une information sur la position d'une porte ce ratio de tension Ulect/Uexc du circuit diviseur de tension de la figure 1, le calculateur FADEC peut déterminer la position exacte des portes de l'inverseur de poussée.

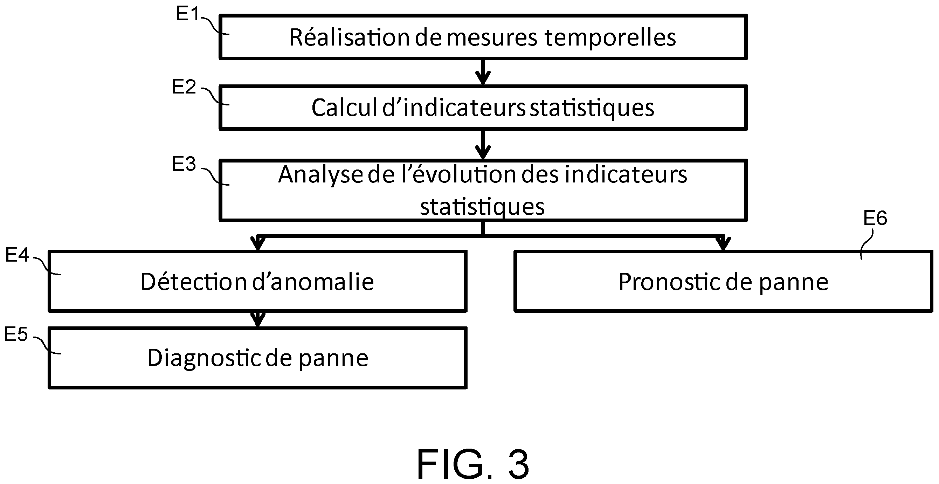

L'invention porte sur un procédé de surveillance d'un inverseur de poussée à actionneurs hydrauliques, par exemple un inverseur composé de deux portes escamotables, doté de contacteurs agencés pour chacun renvoyer une information sur la position des portes. Dans le cadre de l'invention, et en référence à la figure 3, il est proposé de réaliser la surveillance de l'inverseur de poussée sur la base de mesures d'un paramètre représentatif de la position de contacteurs réalisées au cours d'une étape E1 à partir des informations renvoyées par les contacteurs, sur la base des mesures du ratio de tension présenté ci-dessus sans que cela ne soit pour autant limitatif.

Ce procédé comporte une étape E2 selon laquelle on procède au calcul d'un ou plusieurs indicateurs statistiques du paramètre représentatif mesuré au cours de l'étape E1, et une étape E3 selon laquelle on procède à une analyse de l'évolution temporelle du ou des indicateurs statistiques calculés.

Les mesures du paramètre représentatif peuvent être acquises au cours d'une ou plusieurs phases de fonctionnement de l'inverseur parmi une phase transitoire d'ouverture, une phase d'ouverture stabilisée, une phase transitoire de fermeture et une phase de fermeture stabilisée. D'une manière générale, la phase transitoire d'ouverture débute à la commande d'ouverture et termine à l'expiration d'une première temporisation. S'en suit la phase d'ouverture stabilisée, puis la phase transitoire de fermeture qui débute à la commande de fermeture et termine à l'expiration d'une seconde temporisation, puis la phase de fermeture stabilisée.

Le calcul d'indicateurs statistiques et l'analyse de leur évolution temporelle est spécifique à une phase de fonctionnement. Ainsi, si les quatre phases mentionnées ci-dessus sont surveillées, on procède au calcul d'indicateurs statistiques du paramètre mesuré représentatifs de chacune des phases, et à l'analyse de l'évolution temporelle de ces indicateurs statistiques représentatifs pendant chacune des phases.

Selon le procédé de surveillance de l'invention, le calcul d'un ou plusieurs indicateurs statistiques du paramètre mesuré représentatif d'une phase de fonctionnement surveillée de l'inverseur de poussée peut comprendre la détermination d'une moyenne des mesures du paramètre et/ou d'une médiane des mesures du paramètre et/ou un écart-type des mesures du paramètre et/ou d'un type de distribution des mesures du paramètre (on peut ainsi vérifier que les mesures présentent une distribution gaussienne, par exemple par mise en œuvre du test du chi2), ces mesures étant réalisées au cours de la phase de fonctionnement surveillée.

L'analyse de l'évolution temporelle d'un indicateur statistique calculé peut quant à elle comprendre le calcul, typiquement par régression linéaire ou polynomiale, d'une pente de l'indicateur statistique sur une fenêtre temporelle, par exemple une fenêtre de durée paramétrable.

Cette analyse peut également comprendre la comparaison de l'indicateur statistique calculé avec un indicateur de référence préalablement calculé à partir de mesures du paramètre réalisées lors d'un fonctionnement considéré comme sain de l'inverseur de poussée. Cette comparaison peut prendre la forme d'un calcul de score standardisé tel qu'un Z-score. Cette comparaison peut également être réalisée pour plusieurs indicateurs statistiques calculés de manière à fournir un score global. L'intérêt du calcul de score est de caractériser l'état de l'inverseur de poussée surveillé, sous forme de distance par rapport à un fonctionnement sain.

Cette analyse peut également comprendre le calcul de probabilités conditionnelles d'occurrence d'anomalies, par exemple en parcourant un réseau bayésien à partir des indicateurs calculés, un tel réseau présentant l'avantage de permettre l'introduction de connaissances a priori d'experts dans le graphe en compléments de l'expérience acquise grâce à l'observation des indicateurs calculés.

Le résultat de l'analyse de l'évolution temporelle d'un indicateur statistique calculé peut être comparé à un seuil, et une alerte de détection d'anomalie peut être émise en cas de dépassement du seuil comme représenté par l'étape E4 de la figure 3. A titre d'exemple illustratif, la pente de l'indicateur statistique sur une fenêtre temporelle peut être comparée à une pente seuil, une alerte étant émise en cas de dépassement de seuil. Egalement à titre d'exemple illustratif, l'écart entre un indicateur statistique mesuré et son indicateur de référence peut être comparé à un seuil, une alerte étant émise lorsque cet écart dépasse le seuil. Encore à titre d'exemple illustratif, une alerte de détection d'anomalie peut également être émise lorsqu'une probabilité conditionnelle d'occurrence d'une anomalie dépasse un certain seuil.

Dans un mode de réalisation possible, le procédé selon l'invention comprend une étape de diagnostic E5 visant à classifier l'anomalie détectée en cas de dépassement de seuil et à localiser la panne correspondante. Cette étape E5 peut comprendre le calcul d'une signature d'anomalie détectée à partir du ou des indicateurs statistiques calculés et la comparaison de la signature d'anomalie détectée ainsi calculée à une ou plusieurs signatures de référence chacune caractéristique d'un type de défaillance. Les signatures de référence sont typiquement enregistrées dans une base de données. Les signatures de référence peuvent comprendre des signatures construites a priori par expertise, conformément à des comportements caricaturaux des indicateurs en cas d'anomalie. Les signatures de référence peuvent également être construites a posteriori une fois une anomalie détectée et le ou les composants fautifs identifiés.

Dans un mode de réalisation possible, le procédé selon l'invention comprend une étape de prédiction E6 visant à pronostiquer l'occurrence future d'une anomalie. Cette étape E6 peut notamment comprendre le calcul d'une probabilité d'occurrence a posteriori d'une anomalie en fonction d'une probabilité d'occurrence a priori pour chaque anomalie définie par expertise et les écarts entre une signature de l'évolution courante déterminée à partir du ou des indicateurs statistiques calculés et des signatures de référence mentionnées ci-dessus chacune caractéristique d'une défaillance. Cette probabilité d'occurrence a posteriori permet ainsi de calculer une échéance avant de rencontrer une anomalie donnée (l'échéance se traduisant en une durée de fonctionnement restante ou en un nombre restant de cycles d'actionnement de l'inverseur avant de devoir réaliser une opération de maintenance), ou encore de calculer la probabilité de rencontrer une anomalie donnée sur un horizon temporel donné.

On relèvera que d'une manière générale, les étapes E3-E6 du procédé selon l'invention peuvent être mises en œuvre selon les techniques d'analyse détaillées dans le brevet FR 2939924 B1. Et selon une implémentation préférée, les différentes étapes du procédé selon l'invention sont exécutées au moyen d'instructions de code de programme. En conséquence, l'invention vise aussi un produit programme d'ordinateur comprenant des instructions de code pour l'exécution des étapes du procédé selon l'invention tel que décrit ci-dessus, lorsque ledit programme est exécuté sur un ordinateur. En particulier, le procédé peut être mis en œuvre aussi bien avec un programme d'ordinateur embarqué, par exemple au sein du FADEC, qu'avec un programme d'ordinateur au sol exploitant les mesures du paramètre représentatif, typiquement les mesures du ratio de tension d'un circuit diviseur de tension, acquises et enregistrées en embarqué, par exemple par le FADEC.

## Revendications

1. Procédé de surveillance d'un inverseur de poussée à portes escamotables de moteur d'aéronef, l'inverseur de poussée étant un inverseur à actionneurs hydrauliques doté de contacteurs (3a, 4a, 5a, 3B, 4b, 5b, Sa, Sb) agencés pour chacun renvoyer une information sur la position des portes, le moteur comprenant un calculateur (3) configuré pour réaliser des mesures (E1) d'un paramètre représentatif de la position des contacteurs à partir des informations renvoyées par les contacteurs, où le paramètre mesuré par le calculateur est un ratio de tension entre une tension divisée par un circuit diviseur de tension (1) et une tension d'alimentation du circuit diviseur de tension, le circuit diviseur de tension comprenant une résistance de sortie (Rlect) en série avec des modules (M1, M2) reliés en parallèle entre eux, chaque module comprenant un desdits contacteurs (Sa, Sb) relié en série avec une première (Ra1, Rb1) ou une seconde (Ra2, Rb2) résistance de module en fonction de la position dudit contacteur (Sa, Sb), le procédé comprenant en outre un calcul (E2) d'un ou plusieurs indicateurs statistiques du paramètre mesuré et une analyse (E3) de l'évolution temporelle du ou des indicateurs statistiques calculés.

2. Procédé selon la revendication 1, dans lequel le calcul (E2) d'un ou plusieurs indicateurs statistiques du paramètre mesuré comprend la détermination d'une moyenne des mesures du paramètre et/ou d'une médiane des mesures du paramètre et/ou d'un écart-type des mesures du paramètre et/ou d'un type de distribution des mesures du paramètre.

3. Procédé selon l'une des revendications 1 et 2, dans lequel l'analyse (E3) de l'évolution temporelle d'un indicateur statistique calculé comprend le calcul d'une pente de l'indicateur statistique sur une fenêtre temporelle.

4. Procédé selon l'une des revendications 1 et 2, dans lequel l'analyse (E3) de l'évolution temporelle d'un indicateur statistique calculé comprend la comparaison de l'indicateur statistique calculé avec un indicateur de référence préalablement calculé à partir de mesures du paramètre réalisées lors d'un fonctionnement considéré comme sain de l'inverseur de poussée.

5. Procédé selon l'une des revendications 1 à 4, dans lequel le résultat de l'analyse (E3) de l'évolution temporelle d'un indicateur statistique calculé est comparé à un seuil, et dans lequel une alerte de détection d'anomalie (E4) est émise en cas de dépassement du seuil.

6. Procédé selon la revendication 5, comprenant, en cas de dépassement du seuil, le calcul (E5) d'une signature d'anomalie détectée à partir du ou des indicateurs statistiques calculés et la comparaison de la signature d'anomalie détectée à une ou plusieurs signatures de référence chacune caractéristique d'un type de défaillance.

7. Procédé selon l'une des revendications 1 à 4, comprenant le calcul (E6), à partir du résultat de l'analyse de l'évolution temporelle du ou des indicateurs statistiques calculés, d'une probabilité d'occurrence d'une anomalie.

8. Produit programme d'ordinateur comprenant des instructions de code pour l'exécution des étapes du procédé selon l'une des revendications 1 à 7, lorsque ledit programme est exécuté sur un ordinateur.

## Patentansprüche

1. Verfahren zur Überwachung einer Schubumkehrvorrichtung mit einklappbaren Klappen für ein Luftfahrzeug-Triebwerk, wobei die Schubumkehrvorrichtung eine Umkehrvorrichtung mit hydraulischen Betätigungselementen ist, die mit Schaltern (3a, 4a, 5a, 3b, 4b, 5b, Sa, Sb) ausgestattet ist, die so ausgeführt sind, dass sie jeweils eine Information über die Stellung der Klappen zurückgeben, wobei das Triebwerk einen Computer (3) aufweist, der konfiguriert ist, um Messungen (E1) eines Parameters, der die Stellung der Schalter darstellt, aus Informationen, die von den Schaltern zurückgeben werden, auszuführen, wobei der von dem Computer gemessene Parameter ein Spannungsverhältnis zwischen einer durch eine Spannungsteilerschaltung (1) geteilten Spannung und einer Versorgungsspannung der Spannungsteilerschaltung ist, wobei die Spannungsteilerschaltung einen Ausgangswiderstand (Rlect) enthält, der in Reihe mit Modulen (M1, M2) geschaltet ist, die parallel zueinander geschaltet sind, wobei jedes Modul einen der genannten Schalter (Sa, Sb) enthält, welcher mit einem ersten Modulwiderstand (Ra1, Rb1) oder einem zweiten Modulwiderstand (Ra2, Rb2) in Reihe geschaltet wird, je nach der Stellung des genannten Schalters (Sa, Sb), wobei das Verfahren ferner eine Berechnung (E2) eines oder mehrerer statistischer Indikatoren des gemessenen Parameters und eine Analyse (E3) der zeitlichen Veränderung des oder der berechneten statistischen Indikatoren umfasst.

2. Verfahren nach Anspruch 1, bei dem die Berechnung (E2) eines oder mehrerer statistischer Indikatoren des gemessenen Parameters die Bestimmung eines Mittelwerts der Messungen des Parameters und/oder eines Medianwerts der Messungen des Parameters und/oder einer Normal-Abweichung der Messungen des Parameters und/oder einer Verteilungsart der Messungen des Parameters beinhaltet.

3. Verfahren nach einem der Ansprüche 1 und 2, bei dem die Analyse (E3) der zeitlichen Veränderung eines berechneten statistischen Indikators die Berechnung einer Steigung des statistischen Indikators in einem Zeitfenster beinhaltet.

4. Verfahren nach einem der Ansprüche 1 und 2, bei dem die Analyse (E3) der zeitlichen Veränderung eines berechneten statistischen Indikators den Vergleich des berechneten statistischen Indikators mit einem Referenz-Indikator beinhaltet, der zuvor aus Messungen des Parameters berechnet wurde, welche während eines als normal betrachteten Betriebs der Schubumkehrvorrichtung durchgeführt wurden.

5. Verfahren nach einem der Ansprüche 1 bis 4, bei dem das Ergebnis der Analyse (E3) der zeitlichen Veränderung eines berechneten statistischen Indikators mit einem Schwellenwert verglichen wird, und bei dem im Falle einer Überschreitung des Schwellenwerts ein Anomalie-Erkennungs-Alarmsignal (E4) abgegeben wird.

6. Verfahren nach Anspruch 5, das im Falle einer Überschreitung des Schwellenwerts die Berechnung (E5) einer Anomalie-Erkennungs-Kennzeichnung aus dem oder den berechneten statistischen Indikatoren und den Vergleich der Anomalie-Erkennungs-Kennzeichnung mit einer oder mehreren Referenz-Kennzeichnungen, von denen jede charakteristisch für eine Störungsart ist, beinhaltet.

7. Verfahren nach einem der Ansprüche 1 bis 4, das die Berechnung (E6) einer Wahrscheinlichkeit des Auftretens einer Anomalie aus dem Ergebnis der Analyse der zeitlichen Veränderung des oder der berechneten statistischen Indikatoren beinhaltet.

8. Computerprogramm-Produkt, das Code-Anweisungen für die Durchführung der Verfahrensschritte des Verfahrens nach einem der Ansprüche 1 bis 7, wenn das genannte Programm auf einem Computer durchgeführt wird, beinhaltet.

## Claims

1. Method for monitoring an aircraft engine thrust reverser having stowable doors, the thrust reverser having hydraulic actuators and being equipped with switches (3a, 4a, 5a, 3B, 4b, 5b, Sa, Sb) arranged to each return a data item on the position of the doors, the engine comprising a calculator (3) configured to make measurements (E1) of a representative parameter of the position of the switches based on the data returned by the switches, wherein the parameter measured by the calculator is a voltage ratio between a voltage divided by a voltage divider circuit (1) and a power supply voltage of the voltage divider circuit, the voltage divider circuit comprising an output resistor (Rlect) in series with modules (M1, M2) interconnected in parallel, each module comprising one of said switches(Sa, Sb) connected in series with a first (Ra1, Rb1) or a second (Ra2, Rb2) module resistor based on the position of said switch, the method further comprising a computation (E2) of one or a plurality of statistical indicators of the measured parameter and an analysis (E3) of the temporal progression of the computed statistical indicator(s).

2. Method according to claim 1, wherein the computation (E2) of one or a plurality of statistical indicators of the measured parameter comprises determining a mean of the measurements of the parameter and/or a median of the measurements of the parameter and/or a standard deviation of the measurements of the parameter and/or a distribution type of the measurements of the parameter.

3. Method according to any one of claims 1 and 2, wherein the analysis (E3) of the temporal progression of a computed statistical indicator comprises computing a slope of the computed statistical indicator over a time window.

4. Method according to any one of claims 1 and 2, wherein the analysis (E3) of the temporal progression of the computed statistical indicator comprises the comparison of the computed statistical indicator with a reference indicator previously computed based on measurements of the parameter made during thrust reverser operation considered to be sound.

5. Method according to any one of claims 1 to 4, wherein the result of the analysis (E3) of the temporal progression of the computed statistical indicator is compared to a threshold, and wherein a fault detection alert (E4) is issued in the event of overshoot of the threshold.

6. Method according to claim 5, further comprising, in the event of overshoot of the threshold, the computation (E5) of a detected fault signature based on the computed statistical indicator(s) and the comparison of the detected fault signature to one or a plurality of reference signatures each characteristic of a type of failure.

7. The method according to any one of claims 1 to 4, comprising the computation (E6), based on the result of the analysis of the temporal progression of the computed statistical indicator(s), of a probability of occurrence of a fault.

8. Computer program product comprising code instructions for executing the steps of the method according to any one of claims 1 to 7, when said program is executed on a computer.
